# EUROPÄISCHE PATENTSCHRIFT

(11) **EP 0 881 429 B1**
(45) Veröffentlichungstag und Bekanntmachung des Hinweises auf die Patenterteilung: **08.01.2003**
(21) Anmeldenummer: 98810296.8
(22) Anmeldetag: 07.04.1998
(51) Int. Cl.: F22B 29/08, F22B 37/26, F22B 37/48

(54) **Verbesserung des Abscheidegrades von Dampfverunreinigungen in einem Dampf-Wasser-Separator**
Improvement of the impurities separating degree in a steam-water separator
Amelioration du degré de séparation d'impurités dans un séparateur vapeur-eau

(30) Priorität: 26.05.1997 DE 19721854
(43) Veröffentlichungstag der Anmeldung: 02.12.1998
(73) Patentinhaber: ALSTOM (Switzerland) Ltd, 5401 Baden (CH)
(72) Erfinder: Liebig, Erhard, Dr., 71254 Ditzingen (DE); Svoboda, Robert, Dr., 5430 Wettingen (CH)

(56) Entgegenhaltungen:
- EP-A- 0 777 036
- DE-A- 19 544 225
- DE-B- 1 000 828
- GB-A- 431 241
- HEITMAN H.G.: "Praxis der Kraftwerk-Chemie" 1986 , VULKAN-VERLAG , ESSEN DE XP002090116 147990 * Seite 423, Zeile 12 - Seite 425, letzte Zeile * * Seite 437, Absatz 6 - Seite 438, Absatz 3 *

## Beschreibung

### Technisches Gebiet

Die Erfindung betrifft ein Verfahren zum Reinigen des Wasser-Dampfkreislaufs in einem Zwangsdurchlaufdampferzeuger, welcher im wesentlichen aus einem Economiser, einem Verdampfer und einem Überhitzer besteht, und wobei zwischen dem Verdampfer und dem Überhitzer eine Abscheideflasche geschaltet ist.

### Stand der Technik

Derartige Zwangsdurchlaufdampferzeuger können Anwendung finden als Abhitzekessel von Kombianlagen. Zwar werden gegenwärtig Abhitzekessel zur Nutzung der Abwärme von Gasturbinenanlagen in der Regel mit Trommelkesseln ausgeführt. Die Reinigung des Wasser-Dampfkreislaufes erfolgt über die Aufkonzentration in der jeweiligen Trommel und eine kontinuierliche oder diskontinuierliche Abschlämmung der Trommel. Die Aufkonzentration erfolgt dadurch, dass das Wasser in der Kesseltrommel verdampft. Nicht-flüchtige Substanzen verbleiben somit im Kesselwasser und konzentrieren sich zunehmend auf. Mit der Abschlämmung des Kesselwassers werden die Substanzen damit in konzentrierter Form und effizient aus dem Kreislauf entfernt. Dem Trommelwasser wird ausserdem in vielen Fällen zur Einstellung des pH-Wertes im Kessel ein festes Alkalisierungsmittel wie Trinatriumphosphat oder Natriumhydroxid zugesetzt.

Sind die Abhitzekessel jedoch mit einem einfachen Zwangsdurchlaufkessel versehen, so entfällt dieser Reinigungsmechnismus, da ein solcher Kessel nicht abgeschlämmt werden kann. Die Reinigung des Wasser-Dampfkreislaufes wird in diesem Fall in einer Kondensatreinigungsanlage vollzogen, in welcher das Kondensat vor der Einführung in den Dampferzeuger filtriert und gegebenenfalls mittels lonenaustauschern zusätzlich entsalzt wird.

Sind die Abhitzekessel hingegen mit einem eingangs erwähnten Zwangsdurchlaufkessel versehen, können die Verunreinigungen aus der Abscheideflasche wie bei einem Trommelkessel abgezogen werden, wenn die Abscheideflasche unter bestimmtem Bedingungen betrieben wird.

Ein Problem stellen allerdings bei beiden Kesselarten viele unerwünschte Substanzen wie z.B. Chloride und Sulfate dar, die in flüchtiger Form vorliegen, im Beispiel als HCI oder als H₂SO₄. Dies gilt auch im Fall der üblichen Kreislaufkonditionierung mit Ammoniak in Form von flüchtigen Ammoniumchloriden oder von Ammoniumsulfaten. Solche Stoffe können zu Korrosion und in der Folge zu Betriebsstörungen und Schäden führen.

Dokumente GB-A-431 241 und DE-B-1 000 828 offenbaren Verfahren zur Reinigung von Zwangsdurchlaufdampferzeugern bei Vollast und Teillast jeweils ohne Verwendung von Konditionierungsmitteln.

### Darstellung der Erfindung

- Einerseits ausgehend von der Tatsache, dass bisher bei Zwangsdurchlaufkesseln strikte auf die Dosierung mit nichtflüchtigen Konditionierungsmitteln verzichtet wird, da diese sich in den überhitzten Kesselteilen ablagern würden,
- andererseits ausgehend von der Erkenntnis, dass sich bei Trommelkesseln infolge der Zugabe von Alkalisierungsmitteln die Flüchtigkeit der genannten Chloride und Sulfate drastisch verringert,so dass diese beispielsweise bei Phosphatkonditionierung des Kesselwassers gut abgeschlämmt werden können, liegt der Erfindung die Aufgabe zugrunde, bei einer Anlage der eingangs genannten Art, die ohne Kondensatreinigungsanlage auskommen soll, eine Massnahme zu schaffen, die die Flüchtigkeit der vorhandenen Substanzen herabsetzt, und damit deren Ausscheiden aus dem Kreislauf erleichtert.

Erfindungsgemäss wird dies dadurch erreicht, dass bei Vollastbetrieb der Anlage über eine Speisepumpe eine grössere Menge Wasser als erforderlich durch den Economiser und den Verdampfer gefördert wird, welche Wassermenge so bemessen ist, dass Nassdampf in die Abscheideflasche gelangt, dass der Wasseranteil des Dampfes mit allen darin enthaltenen Verunreinigungen in der Abscheideflasche separiert wird und über eine Abschlämmleitung abgezogen wird und dass anlässlich der Überspeisung dem Wasser ein Konditionierungsmittel zudosiert wird, welches die Flüchtigkeit der zu entfernenden Verunreinigungen vemindert.

Gemäss einer vorteilhaften Variante wird die Anlage zuerst auf Teillast heruntergefahren oder hochgefahren oder bei Teillast betrieben, bevor der Durchlaufdampferzeuger überspeist wird und dem Wasser ein Konditionierungsmittel zudosiert wird, welches die Flüchtigkeit der zu entfernenden Verunreinigungen vemindert.

Die Vorteile der Erfindung sind unter anderem in einer beträchtlichen Senkung der Anlagen- und der Betriebskosten zu sehen, in der Risikoverminderung infolge Fehlens einer chemischen Anlage im Wasser-Dampfkreislauf, in der Verbesserung des Abscheidegrades, sowie in der Verkürzung der Reinigungszeit.

Zweckmässigerweise wird als Konditionierungsmittel ein festes Phosphat oder ein selbstzersetzendes Alkalisierungsmittel, beispielsweise ein höhermolekulares organisches Amin zudosiert.

Eine Anwendung des neuen Verfahrens bietet sich insbesondere an bei einer kombinierten Gas-Dampf-Kraftwerksanlage, welche einen Gasturbinenkreislauf und einen Dampfturbinenkreislauf aufweist, wobei die Abgase einer Gasturbine ihre Restwärme über das im Zwangsdurchlaufdampferzeuger strömende Arbeitsmittel an eine Dampfturbine abgeben. Denn trotz der obigen Aussage, dass bisher bei Zwangsdurchlaufkesseln strikte auf die Dosierung mit Konditionierungsmitteln verzichtet wird, können bei Abhitzekesseln mit derartigem Dampferzeuger ohne weiteres gewisse feste Mittel wie beispielsweise Natriumphosphat zum Einsatz gelangen. Dabei wird eine gewisse Ablagerung im überhitzten Kesselteil bewusst in Kauf genommen. Dies ist möglich, weil bezüglich Wärmeübergang des Kessels die Verhältnisse unkritisch sind. Zum einen handelt es sich bei den Zusätzen nur um kleine Mengen, beispielsweise 10 Gramm pro Stunde. Zum andern ist bei einem kombinierten Gas-Dampf-Kraftwerk eine Überhitzung infolge der beschränkten Heissgastemperatur ausgeschlossen. Es ist lediglich darauf zu achten, dass eine Substanz verwendet wird, die auch in hoher Konzentration und/oder in trockenem Zustand nicht korrosiv ist. Diese Ablagerungen im Überhitzer können beim Abfahren, bei einem Stillstand oder beim nächsten Anfahren mit Sattdampf ausgespült werden.

### Kurze Beschreibung der Zeichnung

In der Zeichnung ist ein Ausführungsbeispiel der Erfindung anhand einer kombinierten Gas-Dampf-Kraftwerksanlage dargestellt. Es sind nur die für das Verständnis der Erfindung wesentlichen Elemente gezeigt. Die Strömungsrichtung der Arbeitsmittel ist mit Pfeilen dargestellt.

Es zeigen:
- Fig. 1: das Schema einer kombinierten Gas-Dampf-Kraftwerksanlage;
- Fig. 2: ein Temperatur-Entropie-Diagramm;

### Weg zur Ausführung der Erfindung

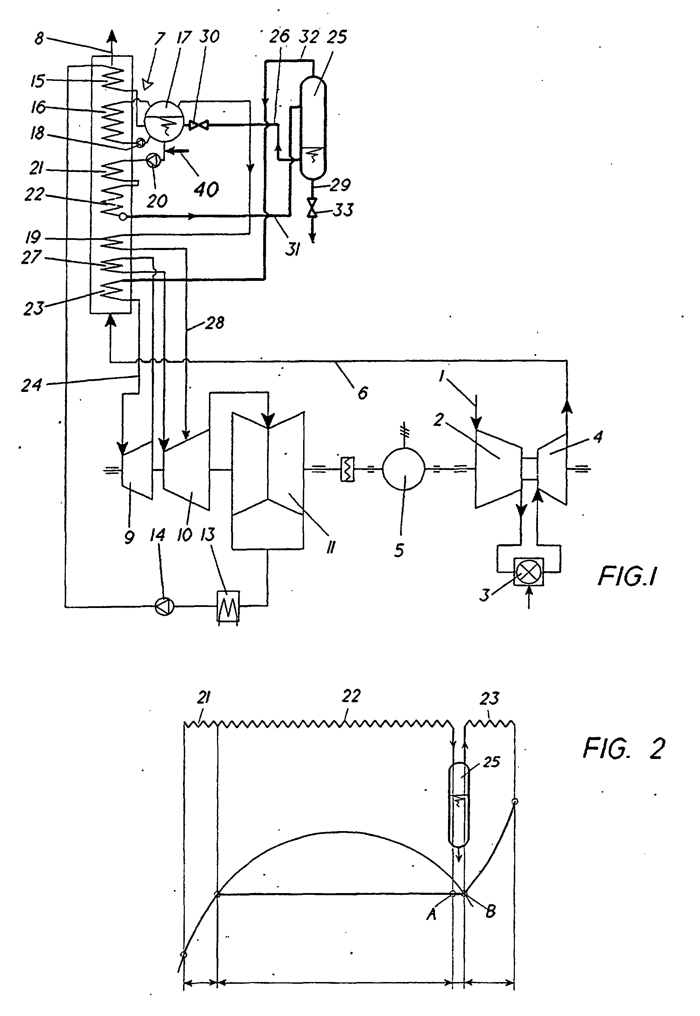

Gemäss Figur 1 wird im Gasturbinensystem über eine Leitung 1 angesaugte Frischluft in einem Verdichter 2 auf den Arbeitsdruck verdichtet. Die verdichtete Luft wird in einer beispielsweise mit Erdgas befeuerten Brennkammer 3 stark erhitzt und das so entstandene Brenngas wird in einer Gasturbine 4 arbeitsleistend entspannt. Die dabei gewonnene Energie wird an einen Generator 5 bzw. den Verdichter 2 abgegeben. Das noch heisse Abgas der Gasturbine wird über eine Leitung 6 vom Ausgang der Gasturbine einer Abhitzedampferzeugungsanlage 7 zugeführt und daraus nach Abgabe seiner Wärme über eine Leitung 8 und einen nicht dargestellten Kamin ins Freie geleitet.

Im Wasser-Dampfkreislauf ist eine mehrgehäusige Dampfturbine 9, 10 und 11 auf der gleichen Welle mit der Gasturbine angeordnet. Der in der Niederdruckturbine 11 entspannte Arbeitsdampf kondensiert in einem Kondensator 13. Das Kondensat wird mittels einer Kondensatpumpe 14 direkt in den Dampferzeuger 7 gefördert Bemerkenswert ist, dass die Anlage keinen dampfbeheizten Speisewasserbehälter/Entgaser aufweist.

Die Abhitzedampferzeugungsanlage 7 ist als stehender Kessel ausgeführt und arbeitet im vorliegenden Fall nach einem Zweidruck-Dampfprozess. Selbstverständlich könnte auch ein liegender Kessel zur Anwendung gelangen. Ebenso ist die Anzahl der Druckstufen im Beispielsfall ohne Belang.

Das Niederdrucksystem ist als Umlaufsystem mit Trommel ausgeführt, wobei hier ein Zwangsumlaufsystem gewählt worden ist. Es besteht im Rauchgasweg des Kessels aus einem Niederdruckeconomiser 15, in den das Kondensat eingeleitet wird, einem Niederdruckverdampfer 16 und einem Niederdrucküberhitzer 19. Der Niederdruckverdampfer ist über eine Umwälzpumpe 18 mit einer Trommel 17 verbunden. Der überhitzte Dampf wird über eine Niederdruck-Dampfleitung 28 in eine geeignete Stufe der Mitteldruck-Dampfturbine 10 überführt.

Das Hochdrucksystem ist als Zwangsdurchlaufsystem ausgeführt und damit sowohl für unterkritische als auch für überkritische Parameter auslegbar. Es besteht im Rauchgasweg des Kessels im wesentlichen aus dem Hochdruckeconomiser 21, dem Hochdruckverdampfer 22 und dem Hochdrucküberhitzer 23. Dem Hochdruckeconomiser 21 wird das Arbeitsmittel über eine Hochdruckspeisepumpe 20 aus der Niederdrucktrommel 17 zugeführt. Auf diese Weise kann der bisher übliche Speisewasserbehälter entfallen. Der überhitzte Dampf wird über eine Frischdampfleitung 24 in den Hochdruckteil 9 der Dampfturbine überführt.

Zur Phasentrennung ist eine Abscheideflasche 25 vorgesehen, in welche der Austritt des Hochdruckverdampfers 22 über eine Leitung 31 mündet. Die Abscheideflasche ist an ihrem obereren Ende über eine Leitung 32 mit dem Hochdrucküberhitzer 23 verbunden. An ihrem unteren Ende ist die Flasche zusätzlich mit einer Abschlämmleitung 29 versehen. Vom unteren Ende der Abscheideflasche geht ebenfalls eine Rezirkulationsleitung 26 ab, welche ein Absperrorgan 30 enthält und in die Niederdrucktrommel 17 mündet.

Nach der Teilentspannung im Hochdruckteil 9 der Turbine wird der Dampf vor der Überleitung in die Mitteldruckturbine 10 zwischenüberhitzt. Diese Zwischenüberhitzung erfolgt im Beispielsfall in Wärmetauschflächen 27, welche im Rauchgasweg des Dampferzeugers oberhalb des Hochdrucküberhitzers 23 angeordnet sind.

Die Abscheideflasche sorgt dafür, dass der Hochdrucküberhitzer jederzeit trocken bleibt und am Kesselaustritt frühzeitig überhitzter Dampf zur Verfügung steht. Sobald im Hochdruckverdampfer der für einen stabilen Betrieb notwendige Druck erreicht ist, kann der Frischdampf zum Anfahren der Dampfturbine im Gleitdruckbetrieb verwendet werden.

Gemäss einem ersten Merkmal der Erfindung soll nun grundsätzlich auf eine Kondensatreinigungsanlage verzichtet werden können. Dem liegt die Überlegung zugrunde, dass die Verunreinigungen im Dampf/Wasserkreislauf im Bereich der Abscheideflasche abgezogen werden können.

Die Reinigung des Dampf/Wasserkreislaufes kann sowohl bei Vollast als auch bei Teillast erfolgen. Bei Vollast wird das Hochdrucksystem überspeist, d.h. es wird über die Hochdruckspeisepumpe eine grössere Menge Wasser als erforderlich durch den Zwangsdurchlauf-Dampferzeuger gefördert. Es versteht sich, dass im Falle einer einzigen Hochdruckspeisepumpe diese für die Mehrmenge entsprechend grösser ausgelegt sein muss. Ist die Anlage mit einer Pumpenredundanz versehen, beispielsweise in Form von 2 x 100% oder 3 x 50%, so kann die Ersatzpumpe zur Überspeisung herangezogen werden.

Die geförderte Wassermenge wird so eingestellt, dass auf jeden Fall Nassdampf in die Flasche gelangt. In den Wassertröpfchen des Wasser-Dampf-Gemisches sind die Verunreinigungen gebunden. In der Flasche wird der Wasseranteil des Dampfes durch geeignete Mittel separiert und über die Abschlämmleitung 29 abgezogen. Von Vorteil bei diesem Verfahren ist, dass der Kreislauf bereits nach wenigen Durchläufen, d.h. innert kürzester Zeit, weitgehend von Verunreinigungen befreit ist.

Eine Variante, bei welcher die Kreislaufreinigung mit der für den Normalbetrieb dimensionierten Speisepumpe erfolgen kann, besteht darin, den Dampferzeuger Teillast, beispielsweise 80%, zu betreiben. Danach wird wie beim Vollastverfahren das Hochdrucksystem überspeist und nach dem oben beschriebenen Verfahren vorgegangen.

Die Effizienz der Abscheidung hängt vom Verteilkoeffizienten ab. Dieser Verteilkoeffizient ist definiert als das Verhältnis der Konzentration der Verunreinigungen in der Dampfphase und in der Wasserphase am Eintritt in die Abscheideflasche. Dieses Verhältnis ist stark abhängig vom Druck, von der Dynamik des Verdampfungsvorganges, d.h. der Möglichkeit der Einstellung chemischer Gleichgewichte sowie von den Verunreinigungen selbst. Mit steigendem Druck nimmt der Zahlenwert des Verteilkoeffizienten zu, d.h. die Aufkonzentration im Wasser geht zurück. Die am Austritt der Abscheideflasche erzielbare Dampfreinheit ist abhängig von diesem Verteilkoeffizient und der Abschlämmrate. Je kleiner der Verteilkoeffizient ist und damit der Druck am Abscheider, desto besser wird die Dampfreinheit und umgekehrt.

Gemäss einem weiteren Merkmal der Erfindung soll eine Massnahme geschaffen werden, die die Flüchtigkeit der vorhandenen Substanzen herabsetzt, und damit deren Ausscheiden aus dem Kreislauf erleichtert. Dies erfolgt durch Zudosierung eines Konditionierungsmittels und hat eine vorteilhafte Verringerung des Verteilkoeffizienten zur Folge. Da die oben beschriebene Reinigung des Wasser/Dampf-Kreislaufes über die Abscheideflasche 25 eine zeitlich begrenzte, spezielle Betriebsweise der Anlage verlangt, wird auch nur während dieser Reinigungsperiode, bei welcher die Abscheideflasche nass betrieben wird, die Dosierung von Chemikalien durchgeführt.

Die Chemikalien werden stromaufwärts der Speisepumpe 20 mit geeigneten Mitteln bei 40 in die Speiseleitung eingeführt.

Die eigentliche Dosierung, d.h. die zu verwendende Chemikalie und deren Menge erfolgt dabei in Abhängigkeit von der Art der Verunreinigung und deren Grades. Die Dosierung erfolgt kontinuierlich während des ganzen Reinigungsprozesses. Die für den Normalbetrieb vorhandene Ammoniakdosierung (NH₃) und Sauerstoffdosierung (O₂-Gas) wird während der Reinigung mit Konditionierungsmitteln eingestellt. Dies ist indes keine absolute Bedingung, sondern abhängig von der Art der Verunreinigung und damit des zu verwendenden Konditionierungsmittels.

Zugesetzt werden können einerseits Feststoffe, andererseits sich selbstzersetzende Alkalisierungsmittel.

Zur erstgenannten Gruppe ist insbesondere Natriumphosphat anwendbar, sei es in Form von reinem Trinatriumphosphat oder als Mischung von Trinatriumphosphat und Dinatriumphosphat.

Zur zweitgenannten Gruppe wären beispielsweise höhermolekulare organische Amine zu zählen. Diese Produkte würden zunächst - da sie eine vorzugsweise in die Wasserphase gerichtete Kondensierbarkeit aufweisen - die Flüchtigkeit der anionischen Verunreinigungen herabsetzen. In der Folge würden sie sich zumindest teilweise im Kessel zersetzen. Hierbei wäre allerdings darauf zu achten, dass die Zersetzungsprodukte selbst eine störende Verunreinigung darstellen könnten. In diesem Fall müssten sie nach Beendigung des Reinigungsvorganges durch Zusetzen einer weiteren Substanz zerstört werden. Hierzu würde sich beispielsweise eine Zudosierung mit Sauerstoffgas eignen.

In der Fig. 2 ist in einem Temperatur-Entropie-Diagramm die symbolische Anordnung der Abscheideflasche 25 während der Reinigungssphase und der Zudosierung von Chemikalien dargestellt. In der Nassdampfphase werden zwischen den Punkten A und B Feuchte und Verunreinigungen aus der Abscheideflasche abgezogen.

Aus alldem ergibt sich, dass im Normalbetrieb die Abscheideflasche 25 trocken ist und keine Dosierung von Chemikalien zur Herabsetzung der Flüchtigkeit gewisser Verungreinigungen erfolgt. Hingegen muss zum Reinigen bei Vollast oder bei Teillast Nassdampf in die Flasche gelangen. Nach dem oben beschriebenen Verfahren gelangt die notwendige Feuchte in die Flasche, in dem das System überspeist wird, was durch Erhöhen des Speisewassermassenstromes und/oder durch Zurückfahren der Gasturbine erreicht wird. Die anlässlich dieses Reinigungsvorganges durchgeführte Herabsetzung der Flüchtigkeit mittels Chemikalien verbessert den Abscheidegrad, was insbesondere hinsichtlich der flüchtigen Substanzen wesentlich ist. Die Massnahme führt ausserdem zu einer Verkürzung des Reinigungsvorganges.

### Bezugszeichenliste

- 1: Leitung (angesaugte Frischluft)
- 2: Verdichter
- 3: Brennkammer
- 4: Gasturbine
- 5: Generator
- 6: Leitung (Abgas)
- 7: Abhitzedampferzeugungsanlage
- 8: Leitung (zum Kamin)
- 9: Hochdruckturbine
- 10: Mitteldruckturbine
- 11: Niederdruckturbine
- 13: Kondensator
- 14: Kondensatpumpe
- 15: Niederdruckeconomiser
- 16: Niederdruckverdampfer
- 17: Niederdrucktrommel
- 18: Umwälzpumpe
- 19: Niederdrucküberhitzer
- 20: Speisewasserpumpe
- 21: Hochdruckeconomiser
- 22: Hochdruckverdampfer
- 23: Hochdrucküberhitzer
- 24: Frischdampfleitung
- 25: Reinigungs-Abscheideflasche
- 26: Rezirkulationsleitung
- 27: Zwischenüberhitzer
- 28: Niederdruck-Dampfleitung
- 29: Abschlämmleitung
- 30: Absperrorgan
- 31: Leitung zwischen 22 und 25
- 32: Leitung zwischen 25 und 23
- 33: Absperrorgan in 29
- 40: Zudosierung eines Konditionierungsmittels

## Patentansprüche

1. Verfahren zum Reinigen des Wasser-Dampfkreislaufs in einem Zwangsdurchlaufdampferzeuger, welcher im wesentlichen aus einem Economiser (21), einem Verdampfer (22) und einem Überhitzer (23) besteht, und wobei zwischen dem Verdampfer (22) und dem Überhitzer (23) eine Abscheideflasche (25) geschaltet ist,
wobei bei Vollastbetrieb der Anlage über eine Speisepumpe (20) eine grössere Menge Wasser als erforderlich durch den Economiser (21) und den Verdampfer (22) gefördert wird, welche Wassermenge so bemessen ist, dass Nassdampf in die Abscheideflasche (25) gelangt, dass der Wasseranteil des Dampfes mit allen darin enthaltenen Verunreinigungen in der Abscheideflasche separiert und über eine Abschlämmleitung (29) abgezogen wird, **dadurch gekennzeichnet,**
**dass** anlässlich der Überspeisung dem Wasser ein Konditionierungsmittel zudosiert wird, welches die Flüchtigkeit der zu entfernenden Verunreinigungen vermindert.

2. Verfahren zum Reinigen des Wasser-Dampfkreislaufs in einem Zwangsdurchlaufdampferzeuger, welcher im wesentlichen aus einem Economiser (21), einem Verdampfer (22) und einem Überhitzer (23) besteht, und
wobei zwischen dem Verdampfer (22) und dem Überhitzer (23) eine Abscheideflasche (25) geschaltet ist,
wobei beim Herunterfahren oder Hochfahren der Anlage auf Teillast oder im Teillastbetrieb über eine Speisepumpe (20) eine grössere Menge Wasser als erforderlich durch den Economiser (21) und den Verdampfer (22) gefördert wird, welche Wassermenge so bemessen ist, dass Nassdampf in die Abscheideflasche (25) gelangt, dass der Wasseranteil des Dampfes mit allen darin enthaltenen Verunreinigungen in der Abscheideflasche separiert und über eine Abschlämmleitung (29) abgezogen wird, **dadurch gekennzeichnet,**
**dass** anlässlich der Überspeisung dem Wasser ein Konditionierungsmittel zudosiert wird, welches die Flüchtigkeit der zu entfernenden Verunreinigungen vermindert.

3. Verfahren nach Anspruch 1 oder 2, **dadurch gekennzeichnet, dass** das Konditionierungsmittel dem Wasser stromaufwärts der Speisepumpe (20) zugesetzt wird.

4. Verfahren nach Anspruch 1 oder 2, **dadurch gekennzeichnet, dass** das Konditionierungsmittel ein festes Phosphat ist.

5. Verfahren nach Anspruch 1 oder 2, **dadurch gekennzeichnet, dass** als Konditionierungsmittel ein selbstzersetzendes Alkalisierungsmittel ist, beispielsweise ein höhermolekulares organisches Amin.

6. Anwendung des Verfahrens nach einem der Ansprüche 1 bis 5 bei einer kombinierten Gas-Dampf-Kraftwerksanlage, welche einen Gasturbinenkreislauf und einen Dampfturbinenkreislauf aufweist, wobei die Abgase einer Gasturbine (4) ihre Restwärme über das in einem Zwangsdurchtauf-dampferzeuger strömende Arbeitsmittel an eine Dampfturbine abgeben.

## Claims

1. Method for purifying the water/steam circuit in a once-through steam generator which consists essentially of an economizer (21), an evaporator (22) and a superheater (23), a separating bottle (25) being inserted between the evaporator (22) and the superheater (23), wherein, in the full load mode of the plant, a greater quantity of water than is necessary is conveyed through the economizer (21) and the evaporator (22) via a feed pump (20), said water quantity being measured in such a way that wet steam enters the separating bottle (25), that the water fraction of the steam, together with all the impurities contained therein, is separated in the separating bottle and is drawn off via a blowdown line (29), **characterized in that**, on the occasion of overfeeding, a conditioning agent is metered to the water, said agent reducing the volatility of the impurities to be removed.

2. Method for purifying the water/steam circuit in a once-through steam generator which consists essentially of an economizer (21), an evaporator (22) and a superheater (23), a separating bottle (25) being inserted between the evaporator (22) and the superheater (23), wherein, during the rundown or runup of the plant to part mode or in the part load mode, a greater quantity of water than is necessary is conveyed through the economizer (21) and the evaporator (22) via a feed pump (20), said water quantity being measured in such a way that wet steam enters the separating bottle (25), that [sic] the water fraction of the steam, together with all the impurities contained therein, is separated in the separating bottle and is drawn off via a blowdown line(29), **characterized in that**, on the occasion of overfeeding, a conditioning agent is metered to the water, said agent reducing the volatility of the impurities to be removed.

3. Method according to Claim 1 or 2, **characterized in that** the conditioning agent is added to the water upstream of the feed pump (20).

4. Method according to Claim 1 or 2, **characterized in that** the conditioning agent is a solid phosphate.

5. Method according to Claim 1 or 2, **characterized in that** there is a self-decomposing alkalizing agent, for example a higher-molecular organic amine, as a conditioning agent.

6. Use of the method according to one of Claims 1 to 5 in a combined gas/steam power station plant which has a gas turbine circuit and a steam turbine circuit, the waste gases from a gas turbine (4) transferring their residual heat to a steam turbine via the working medium flowing in a once-through steam generator.

## Revendications

1. Procédé de nettoyage du circuit d'eau-vapeur dans un générateur de vapeur à circulation forcée qui est constitué essentiellement d'un économiseur (21), d'un évaporateur (22) et d'un surchauffeur (23), une bouteille de séparation (25) étant raccordée entre l'évaporateur (22) et le surchauffeur (23), procédé dans lequel :
en fonctionnement à pleine charge de l'installation, on refoule, via une pompe alimentaire (20), un débit d'eau plus grand que nécessaire à travers l'économiseur (21) et l'évaporateur (22), ledit débit d'eau étant calculé de sorte qu'il apparaisse de la vapeur humide dans la bouteille de séparation (25) et que la fraction d'eau de la vapeur avec toutes les impuretés qui y sont contenues soit séparée dans la bouteille de séparation et soutirée via une conduite de purge (29),
**caractérisé en ce qu'**à l'occasion de la suralimentation, on ajoute à l'eau un agent de conditionnement dosé, qui réduit la volatilité des impuretés à éliminer.

2. Procédé de nettoyage du circuit d'eau-vapeur dans un générateur de vapeur à circulation forcée qui est constitué essentiellement d'un économiseur (21), d'un évaporateur (22) et d'un surchauffeur (23), et dans lequel une bouteille de séparation (25) est raccordée entre l'évaporateur (22) et le surchauffeur (23), procédé dans lequel :
en soumettant l'installation à une descente en puissance ou à une montée en puissance à charge partielle ou en la mettant en fonctionnement à charge partielle, on refoule, via une pompe alimentaire (20), un débit d'eau plus grand que nécessaire à travers l'économiseur (21) et l'évaporateur (22), ledit débit d'eau étant mesuré de sorte qu'il apparaisse de la vapeur humide dans la bouteille de séparation (25) et que la fraction d'eau de la vapeur avec toutes les impuretés qui y sont contenues soit séparée dans la bouteille de séparation et soutirée via une conduite de purge (29),
**caractérisé en ce qu'**à l'occasion de la suralimentation, on ajoute à l'eau un agent de conditionnement dosé, qui réduit la volatilité des impuretés à éliminer.

3. Procédé selon la revendication 1 ou 2, **caractérisé en ce que** l'agent de conditionnement est ajouté à l'eau en amont de la pompe alimentaire (20).

4. Procédé selon la revendication 1 ou 2, **caractérisé en ce que** l'agent de conditionnement est un phosphate solide.

5. Procédé selon la revendication 1 ou 2, **caractérisé en ce que** l'on utilise comme agent de conditionnement un agent d'alcalinisation qui se décompose spontanément, par exemple une amine organique de plus haut poids moléculaire.

6. Utilisation du procédé selon l'une quelconque des revendications 1 à 5 dans une centrale électrique combinée à gaz-vapeur, qui présente un circuit à turbine à gaz et un circuit à turbine à vapeur, les gaz d'échappement d'une turbine à gaz (4) délivrant leur chaleur résiduaire à une turbine à vapeur via le fluide moteur s'écoulant dans le générateur de vapeur à circulation forcée.
